# EUROPEAN PATENT APPLICATION

(11) **EP 3 435 060 A1**
(43) Date of publication of application: **30.01.2019**
(21) Application number: 17769424.7
(22) Date of filing: 21.03.2017
(51) Int. Cl.: G01N 1/28, G02B 21/34

(54) **SLIDE COVER FOR USE IN SAMPLE SLIDE PROCESSING, AND METHOD UTILIZING SAME**

(30) Priority: 21.03.2016 CN 201610160758; 31.08.2016 CN 201610798089
(71) Applicant: Xiamen Talent Biomedical Technology Company, Ltd., Haicang District Xiamen Fujian (CN)
(72) Inventor: GUO, James, Guangzhou Guangdong 511458 (CN); GUO, Derek, Guangzhou Guangdong 511458 (CN)
(74) Representative: Petraz, Gilberto Luigi
(86) International application number: PCT/CN2017/077567
(87) International publication number: WO 2017/162147

(57) **Abstract**

The present invention discloses a slide cover plate (601) for slide specimen processing and an application method thereof. The slide cover plate (601) comprises a capillary plane (1), a depth locating face (2), a width locating block (3), a bottom locating block (4), a reservoir side face (6), a reservoir opening face (7) and a guiding opening (5). There's a capillary gap at the middle of a slide assembly (103) formed by that the slide cover plate (601) fits with the slide (101). During loading, a reagent fills the gap via the capillary siphoning effect, and no matter in which way the slide assembly (103) is placed (placed upright or inclined), the reagent in the gap will not be drained off. When a new reagent is added, the new reagent enters the gap from a reagent loading reservoir (102), the former reagent existing in the gap flows from the guiding opening (5) at the bottom of the slide assembly (103) and is replaced by the new reagent automatically. It doesn't require steps of removing and draining the former reagent of the last step before adding the new reagent. The slide assembly (103) is made of a heat-resisting material and can be immersed or partially inserted in a hot medium for heating and heat preservation, achieving that the slide specimen remains inside the same device for processing from the beginning to the end.

## Description

### TECHNICAL FIELD

The present invention belongs to a field of biological specimen processing, and specifically relates to a slide cover plate for biological section specimen processing, and application method thereof.

### BACKGROUND

The whole process of tests of proteins, pathogens or genes, such as by immunohistochemistry and by in-situ hybridization gene testing, on a slide specimen requires dozens of complicated steps, and accuracy of the test result thereof may be severely affected by various factors such as environment and manual operation. Simplifying an operation process and reducing an influence of environment are of the highest priority to enhance an efficiency and accuracy of specimen testing.

Currently, during the test process, a slide specimen is laid horizontally which takes a rather large space and limits the number and efficiency of the slide specimen processing.

A reagent is dispensed from the above of the slide, which could make a big position error. After adding the reagent, incubation at open may easily lead to a problem of evaporation of the reagent and drying of the specimen.

Usually, the reagent is added by dispensing from the above of the slide, and before dispensing, liquids that previously present on the slide need to be removed and the slide needs to be drained off and wiped. Such operations bring a high degree of manual error, and an amount of the residual liquid may affect a concentration and an efficacy of the reagent in the next step. The process of wiping the slide may also damage the specimen and leads to the drying of specimen that is wiped previously and thus results in a failure of the specimen processing.

During the specimen processing, a majority of specimens require a heat treatment. A majority of specimens require a heat treatment, which is a necessary step to make a characteristic protein of an antigen or the pathogen restore to an original shape, or make gene strands melt. The heating is generally performed at a temperature of 80 - 121°C and maintained for 3 to 60 minutes. The most common methods are as follows: cooking in an autoclave, conventional boiling, cooking in a microwave oven or heating in water bath. However, container or shelf that is used for slide specimen processing in the manual operation at present is neither heat-resisting, nor has a heating function. During the slide specimen processing, the slide specimen needs to be transferred into a heatable container, and then transferred back to a normal-temperature operation desk, increasing the complexity of the operation process and the operation error.

The present invention achieves that the slide specimen needs not to be transferred and still remains inside the same device for processing from the beginning to the end, which simplifies the operation steps of the slide specimen processing and enhances the efficiency and reliability of the slide specimen processing.

Implementations of the present invention are shown in the accompanied drawings and will be described below in detail. However, the present invention includes various modifications and alternative methods and devices. It should be understood that specific description and accompanied drawings are not meant to limit the specific forms disclosed by the present invention, and instead, the scope of the present invention as claimed intends to include all modifications and all alternative constructions to their equivalents within the spirit and scope of the present invention as claimed by the claims. In the accompanied drawings, same reference refers to identical or similar characteristic.

### SUMMARY OF THE INVENTION

In order to solve the above problems, a slide cover plate for slide specimen processing and application method thereof are provided. The cover plate may fit with a common slide (mount slide), one tiny capillary flat-plate type gap is formed between the slide and the cover plate, and one reagent loading reservoir which is connected with the capillary gap is formed. A specimen section is stuck on a slide and located in the capillary gap. When a reagent is added to the reagent loading reservoir, owing to the capillary effect, the reagent enters the capillary gap and covers the specimen section. The cover plate is made of a material which may endure a temperature of 80°C or above. A slide assembly can be immersed entirely or with a bottom thereof partially inserted in a hot solution for heating, without separating the cover plate from the slide. Even if a liquid inside the capillary gap evaporates during the heating, owing to the capillary siphoning effect, solution in the gap can automatically be replenished by sucking liquid from a gap opening at the bottom, resulting in a sufficient and uniform heating without a possibility of specimen drying, and reliability and repeatability during the heating process are guaranteed. A length of the cover plate is approximately equal to that of the slide. A label dent is provided on a depth locating face of the cover plate, which will not affect sticking a label on the slide; or the slide cover plate may also be shorter than the slide, leaving space for sticking (or printing) a label at the top of the slide. It is favorable to the requirement of specimen identification and process automation.

Objectives of the present invention are achieved at least by one of the following technical solutions.

A slide cover plate for slide specimen processing, wherein the slide cover plate is used to fit with a rectangular-sheet specimen slide to assemble a set of slide assembly for specimen processing. The slide cover plate comprises a capillary plane, a depth locating face, a width locating block, a bottom locating block, a reservoir side face and a reservoir opening face.

Two depth locating faces are provided above two lateral sides facing toward each other of the capillary plane, and the capillary plane is parallel to the depth locating faces; portions of a plane of the slide which are close to edges of two sides are attached to the depth locating faces, so that a capillary gap is formed between a slide surface and the capillary plane; one or more width locating blocks are provided at an outer edge of each depth locating face which is far away from the capillary plane; a vertical distance between the width locating blocks located on different depth locating faces matches to a width of the slide to play a stopping function (the former may be equal to or slightly greater than the latter); and the bottom locating block is provided at a bottom of the depth locating face.

The reservoir opening face is connected with an upper end of the capillary plane and forms an angle A1, and A1 is a plane angle of 1° to 175°; two sides of the reservoir opening face are each connected with one reservoir side face; and the reservoir opening face and two reservoir side faces and a slide plane together constitute one reagent loading reservoir which is connected with the capillary gap. A bottom of the capillary plane (1), that is, the bottom of the capillary gap has a gap opening.

As further implementation, the slide cover plate is shorter than the slide, and space for sticking or printing a label is provided at a position where the slide is beyond above the slide cover plate. In this case, there's no need to provide a label dent on the depth locating face.

Further preferably, a length of the slide cover plate corresponds to or is equal to that of the slide, one label dent is provided on each side of the reservoir side face which is attached to the slide plane, that is, upper ends of the two depth locating faces are each provided with one label dent, and when the label is stuck to the slide, the label dent provides enough space for a thickness of the label, enabling the slide cover plate to be pressed tight against the slide without being affected by whether a label is stuck to the slide.

Further preferably, outer sides of the two reservoir side faces are provided with top stripes for enhancing a friction between the reservoir side face and a finger.

Further preferably, a vertical distance between the capillary plane and the depth locating face is 0.01 to 0.5 mm, so that after the slide cover plate is pressed tight against the slide, one capillary gap having a spacing D1 (generally D1 is 0.01 to 0.5mm) is formed between the slide surface and the capillary plane; and a thickness of the width locating block that is higher beyond the depth locating face refers to D2 (generally D2 is 0.1 to 1 mm). The distance between two locating blocks which are located on different sides is slightly greater than the width of the slide.

The slide cover plate of the present invention at least contains one biological specimen thereon.

Further preferably, an assembly formed after the slide cover plate is pressed tight against the slide, that is, the slide assembly, can be placed upright or inclined, with an inclination angle of 1 to 90 degrees.

Further preferably, the bottom locating block is upward hook-like, and the bottom locating block and the width locating block together determine a relative position after the cover plate is pressed against the slide, and assist keeping the cover plate pressed tight against the slide.

Further preferably, a back of the slide cover plate, that is, the back of the reservoir opening face, between outer sides thereof and the capillary plane is provided with a reinforcing rib.

Further preferably, the slide cover plate is made of a material that is able to remain non-deformed and not-soften when heated to 80°C or above.

Further preferably, a bottom of the capillary plane is further provided with two guiding angles; one funnel-type guiding opening is formed between the two guiding angles, and allows solution in the capillary plane to flow out of the guiding opening, making the liquid enter the capillary gap from the reagent loading reservoir by the effect of gravity and resulting in a more uniform flowing of the liquid from the gap opening at the bottom of the capillary gap; and a height of the guiding angle relative to the capillary plane is aligned to the depth locating face.

In an application method of the slide cover plate for slide specimen processing according to present invention, the slide assembly that is assembled after the slide cover plate is pressed tight against the slide can be immersed entirely or with a bottom thereof partially inserted in a hot solution for heating, and even if evaporation generates during the heating, solution in the gap can be automatically replenished by sucking liquid from the gap opening at the bottom or from the guiding opening. Generally, the slide assembly can be placed upright or inclined in an insertion slot with an angle of 1 to 90 degrees.

As further implementation, a dimension of A1 should be configured according to the angle by which the slide assembly is inserted. After the slide assembly is inserted inclined, the reagent loading reservoir is formed. Two sides of the reservoir opening face are each connected with one reservoir side face; and the reservoir opening face and two reservoir side faces and the slide plane together constitute one reagent loading reservoir which is connected with the capillary gap.

Further preferably, the bottom locating block also plays an auxiliary function of clamping the slide and the cover plate, guaranteeing the formation and the consistency of the capillary gap.

As further implementation, the reservoir side face and the capillary plane form an inclined angle, or are perpendicular to each other.

Further preferably, the length of the slide cover plate approximately corresponds to the length of the slide, generally being 75 mm. The length of the slide cover plate may also be shorter than the length of the slide, and a portion of the slide is exposed for printing or sticking a label.

Compared to the prior art, the present invention has following advantages and technical effects:
In the present invention, when the slide cover plate is pressed tight against the slide, there's one capillary gap at the middle of the slide assembly formed. When the reagent is added to the reagent loading reservoir, the reagent enters and fills the capillary gap from the reagent loading reservoir via the effects of gravity and capillary siphoning. Regardless of where the specimen section is in the capillary gap, the reagent can cover the specimen section, eliminating the risk of that the specimen is not covered by the reagent.

The slide assembly of the present invention can be placed horizontally, inclined or upright according to the requirement of space, while the liquid in the gap will not be drained off, and thereby the slide assembly can be placed inclined or upright according to the requirement of space, enhancing space utilization.

The slide cover plate of the present invention can be made of a high-temperature resisting material. The slide assembly that is assembled after the slide cover plate is assembled with the slide can be immersed directly or partially inserted in a hot solution for heating and heat preservation. When being heated, even if the liquid in the gap evaporates, the liquid can also be automatically replenished by sucking liquid from the gap opening at the bottom, preventing the specimen from being dried up during a heat restoration, and enhancing the reliability and repeatability of the specimen processing.

In the slide assembly during the whole process of the slide specimen processing, the relative position between the slide cover plate and the slide is held still from the beginning to the end, without separation.

When the designed slide assembly is placed inclined or upright (by the angle of 1 to 90 degrees), when a new reagent is added during the operation process, the former reagent existing in the gap will be replaced by the new reagent automatically and flow from the guiding opening at the bottom, without steps of removing and draining the initial liquid (reagent) on the slide before adding the new reagent. In the whole process of the slide specimen processing, there's no need to take or transfer the slide manually which enhances an efficiency of cleaning and simplifies the procedure.

### BRIEF DESCRIPTION OF THE DRAWINGS

FIG. 1a shows a structural diagram of a slide cover plate for slide specimen processing.
FIG. 1b shows a further optimized structural diagram of the embodiment shown in FIG. 1a.
FIG. 2 shows a structural diagram of a slide assembly which is assembled by that the slide cover plate for slide specimen processing fits with the slide in the embodiment.
FIG. 3 shows a structural diagram of a back of the slide cover plate for slide specimen processing.
FIG. 4a shows a slide assembly which is formed after the slide cover plate for slide specimen processing fits with the slide in the embodiment.
FIG. 4b shows an A-A section of FIG. 4a.
FIG. 4c shows an enlarged view of partial B of FIG. 4b.
FIG. 5 shows a structural diagram of a slide rack for inserting the slide assembly in the embodiment.
FIG. 6 shows a structural diagram of a multi-row slide rack for inserting the slide assembly in the embodiment.
FIG. 7 shows a structural diagram of a slide rack for inserting a plurality of slide assemblies in the embodiment.

In the figures: 1 - capillary plane; 2 - depth locating face; 3 - width locating block; 4 - bottom locating block; 5 - guiding opening; 6 - reservoir side face; 7 - reservoir opening face; 8 - reinforcing rib; 9 - label dent; 10 - top stripes; 11 - guiding angle; 101 - slide; 102 - reagent loading reservoir; 103 - slide assembly; 501 - gap opening; 601 - slide cover plate; 602 - slide rack; 602b - multi-row slide rack; 603 - plate type spring piece; 604 - insertion slot.

### DETAILED DESCRIPTION OF THE PREFERRED EMBODIMENT

The present invention is further described below in combination with specific embodiments, but implementations and protection of the present invention are not limited by these.

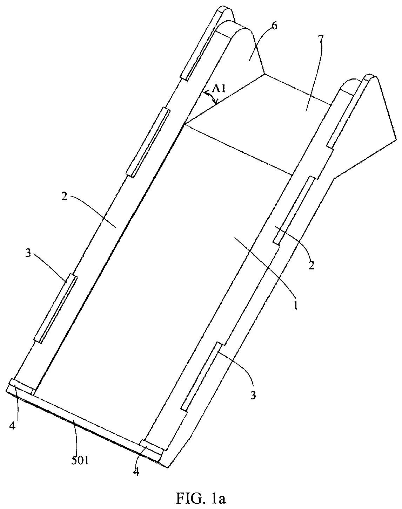

As shown in FIG. 1a, a slide cover plate for slide specimen processing, mainly comprises components such as a capillary plane 1, a depth locating face 2, a width locating block 3, a bottom locating block 4, a gap opening 501, a reservoir side face 6 and a reservoir opening face 7. Such slide cover plate can be used in the case that a length of the slide is greater than a length of the slide cover plate. Two depth locating faces 2 are provided above two lateral sides facing toward each other of the capillary plane 1, and the capillary plane 1 is parallel to the depth locating faces. There are two depth locating faces 2 in total, which are each located at the left side and the right side of the capillary plane 1. Portions of a plane of the slide which are close to edges of two sides are attached to the depth locating faces 2, so that a capillary gap is formed between a slide surface and the capillary plane 1; one or more width locating blocks 3 are provided at an outer edge of each depth locating face 2 which is far away from the capillary plane 1; a vertical distance between the width locating blocks 3 (i.e. two width locating blocks at the left and the right in FIG. 1a) located on different depth locating faces 2 matches to a width of the slide to play a stopping function; the bottom locating block 4 is provided at a bottom of the depth locating face 2; the reservoir opening face 7 is connected with an upper end of the capillary plane 1 and forms an angle A1, and A1 is a plane angle of 1° to 175°; two sides of the reservoir opening face 7 are each connected with one reservoir side face 6; and the reservoir opening face 7 and two reservoir side faces 6 and a slide plane can together constitute one reagent loading reservoir which is connected with the capillary gap. A bottom of the capillary gap has a gap opening 501.

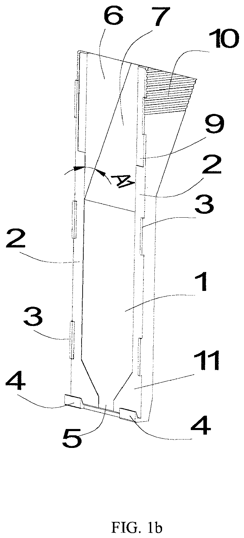

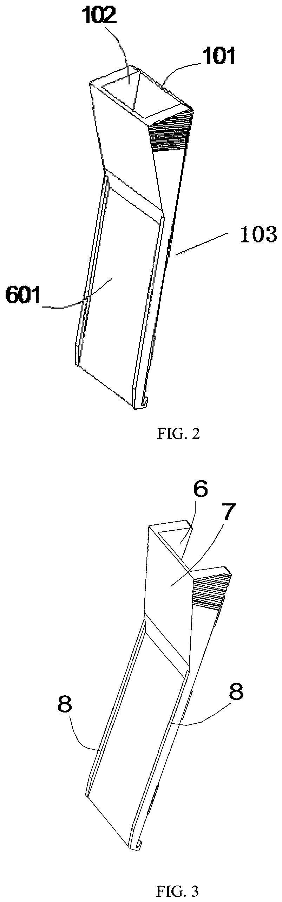

As further preferable implementation, a length of the slide cover plate corresponds to or is equal to that of the slide. One label dent is provided on each side of the reservoir side face which is attached to the slide plane, that is, upper ends of the two depth locating faces are each provided with one label dent, and when the label is stuck to the slide, the label dent provides enough space for containing a thickness of the label, enabling the slide cover plate to be pressed tight against the slide without being affected by whether the label is stuck to the slide. The bottom locating block is preferably upward hook-like, and outer sides of the two reservoir side faces are provided with top stripes for enhancing a friction between the reservoir side face and the finger. As shown in FIGs. 1b and 2, a slide assembly 103 which is assembled by that a slide cover plate 601 for slide specimen processing fits with a slide 101, mainly comprises components such as a capillary plane 1, a depth locating face 2, a width locating block 3, a bottom locating block 4, a guiding opening 5 at the bottom, a reservoir side face 6, a reservoir opening face 7, a reinforcing rib 8, a label dent 9 and a slide 101. Particularly, a structural relationship of the capillary plane 1, the depth locating face 2, the width locating block 3, the bottom locating block 4, the reservoir side face6 and the reservoir opening face 7 is as same as that in FIG. 1a. Such further preferable design makes a structure of a rack device simpler and leads to a greatly decreased manufacturing cost. A V-shape insertion slot structurally fits with the slide assembly. When using the slide assembly, it only requires the fingers to clamp the top stripes portions of two reservoir side faces and the slide, so that it is easy to insert the slide assembly into the insertion slot. Uneven stressing generating when a top end of the slide is pressed and separation of the slide from the slide cover plate owing to deviation of a stressing direction are prevented, guaranteeing the formation and accuracy of the capillary gap and making the operation simpler and faster. Besides, arrangement of the slide assemblies can be tighter, which further saves space and enhances a processing efficiency.

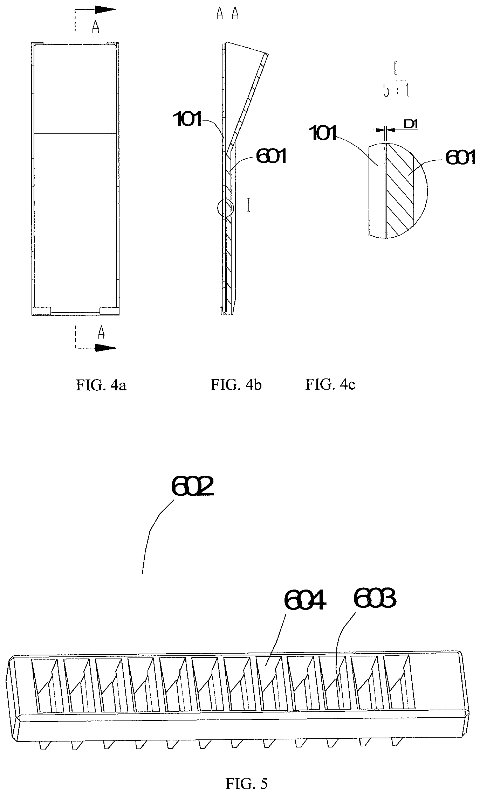

As shown in FIGs. 4a to 4c and FIG. 5, the slide cover plate is used to fit with a rectangular-sheet specimen slide (mount) 101 to assemble a set of assembly for specimen processing. The capillary plane 1 is a plane, and the value of a vertical distance between the capillary plane 1 and the depth locating face 2 refers to D1. There are two depth locating faces 2 in total, which are respectively located at two sides of the capillary plane 1. A plane of the slide is attached to the depth locating faces 2, so that one capillary gap having a spacing of D1 is formed between a slide surface and the capillary plane 1, wherein the value of D1 is 0.01 to 0.5 mm. The width locating block 3 is provided at the edge of the depth locating face 2 and is beyond the locating face 2 by a value of D2, wherein the value of D2 is 0.1 to 1 mm. A distance between two locating blocks at the left and right is slightly greater than a width of the slide. A bottom locating hook 4 is provided at the bottom of the depth locating face 2, and together with the width locating block fixes a relative position after the cover plate is pressed against the slide, and the bottom locating hook 4 together with a plate type spring which is inside the insertion slot of the slide rack assists clamping the cover plate and the slide, guaranteeing the formation and accuracy of the capillary gap.

The reservoir opening face 7 is connected with the capillary plane 1 and forms an angle A1, and A1 is a plane angle of 1° to 175°, generally a plane angle of 1° to 90°. The reservoir side face 6 and the capillary plane 1 form an inclined angle, or are perpendicular to each other, and the reservoir side face 6 is connected with the reservoir opening face 7. The reservoir opening face 7 and two reservoir side faces 6 at both sides of the reservoir opening face 7 and the plane of the slide 101 together constitute one reagent loading reservoir 102.

As further implementation, a funnel-type guiding opening 5 is provided at the bottom of the capillary plane 1.

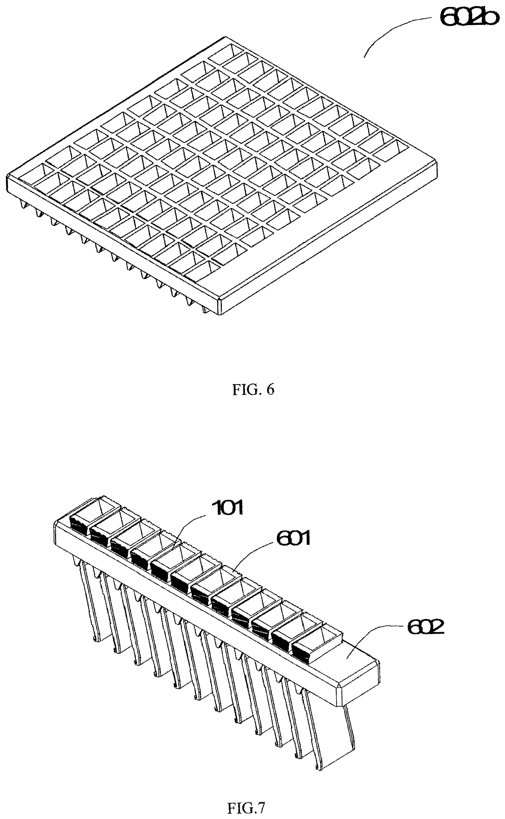

As shown in FIG. 6, a plurality of slide assemblies 103 assembled by the slide cover plate 601 and the slide 101 are inserted in the insertion slots of a slide rack 602. The insertion slots are generally configured upright or inclined, with an angle generally of 1° to 90°.

FIG. 7 shows a structural diagram of a slide rack for inserting a plurality of slide assemblies in the embodiment. The structure of the slide cover plate in the present invention allows the insertion slots of the slide rack 602 to only provide two clamping faces. A smallest gap between the two clamping faces is less than or equal to (preferably less than) a total thickness of the slide assembly 103, so that when the slide assembly 103 is inserted in the smallest gap of the slide rack 602, the slide assembly 103 can be clamped tight by the two clamping faces via a generated elastic pressure.

A material of the slide cover plate is a material that is able to remain non-deformed or non-melted when enduring 80°C or above, such as polycarbonate PC, so that there's no need to separate the cover plate from the slide when the slide cover plate and the slide are in a thermal treatment.

The value of D1 is 0.01 to 0.5 mm, and the value of D2 is generally 0.1 to 1 mm. Within this range, after the slide cover plate is pressed tight against the slide, liquid in the gap will not be drained off owing to the capillary siphoning effect, the specimen on the slide can be covered by the reagent always, and it can be placed inclined or upright according to the requirement of space.

Embodiment: the slide cover plate has a dimension as follows: a length of the depth locating face 2 is 54 mm, a distance between inner sides of two width locating blocks 3 is 20 mm, D1 = 0.2 mm, D2 = 0.5 mm, the capillary plane has a length of 40 mm and a width of 20 mm, and an inclined angle between the reservoir opening face and the depth locating face is 60°. The slide has a length of 75 mm and a width of 25 mm. A specimen section has a thickness of about 0.005 mm. It is indicated from the experiment that the capillary gap was formed between the slide and the capillary plane of the cover plate, and the capillary siphoning effect could be generated. When loading, the reagent filled the gap.

During a process of immunohistochemical staining, replacement of a liquid in the gap of the slide assembly 103 of the present invention is even. Two heating methods were tested: the slide assembly 103 was directly immersed in a boiling restoration solution, and with the bottom partially inserted in the boiling restoration solution for heating for 60 minutes. The gaps in these two heating methods were filled with liquid all the time, without bubble accumulation or drying. They all achieved excellent effect in slide specimen processing.

## Claims

1. A slide cover plate for slide specimen processing, wherein the slide cover plate is used to fit with a rectangular-sheet specimen slide to assemble a set of slide assembly (103) for specimen processing, **characterized in that**, the slide cover plate comprises a capillary plane (1), a depth locating face (2), a width locating block (3), a bottom locating block (4), a reservoir side face (6) and a reservoir opening face (7);
two depth locating faces (2) are provided above two lateral sides facing toward each other of the capillary plane (1), and the capillary plane (1) is parallel to the depth locating faces; portions of a plane of the slide which are close to edges of two sides are attached to the depth locating faces (2), so that a capillary gap is formed between a slide surface and the capillary plane (1); one or more width locating blocks (3) are provided at an outer edge of each depth locating face (2) which is far away from the capillary plane (1); a vertical distance between the width locating blocks (3) located on different depth locating faces (2) matches to a width of the slide to play a stopping function; the bottom locating block (4) is provided at a bottom of the depth locating face (2);
the reservoir opening face (7) is connected with an upper end of the capillary plane (1) and forms an angle A1, and A1 is a plane angle of 1° to 175°; two sides of the reservoir opening face (7) are each connected with one reservoir side face (6); and the reservoir opening face (7) and two reservoir side faces (6) and a slide plane together constitute one reagent loading reservoir which is connected with the capillary gap.

2. The slide cover plate for slide specimen processing according to claim 1, wherein a bottom of the capillary plane (1), that is, the bottom of the capillary gap has a gap opening.

3. The slide cover plate for slide specimen processing according to claim 1, wherein a length of the slide cover plate corresponds to or is equal to that of the slide, one label dent (9) is provided on each side of the reservoir side face (6) which is attached to the slide plane, that is, upper ends of the two depth locating faces (2) are each provided with one label dent (9), and when the label is stuck to the slide, the label dent provides enough space for containing a thickness of the label, enabling the slide cover plate to be pressed tight against the slide without being affected by whether the label is stuck to the slide.

4. The slide cover plate for slide specimen processing according to claim 1, wherein the slide cover plate is shorter than the slide, and space for sticking or printing a label is provided at a position where the slide is beyond above the slide cover plate.

5. The slide cover plate for slide specimen processing according to claim 1, wherein outer sides of the two reservoir side faces (6) are provided with top stripes (10) for enhancing a friction between the reservoir side face (6) and the finger.

6. The slide cover plate for slide specimen processing according to claim 1, wherein a vertical distance between the capillary plane (1) and the depth locating face (2) is 0.01 to 0.5 mm, so that after the slide cover plate is pressed tight against the slide, one capillary gap having a spacing of 0.01 to 0.5mm is formed between the slide surface and the capillary plane (1); and a thickness of the width locating block (3) that is higher beyond the depth locating face (2) is 0.1 to 1 mm.

7. The slide cover plate for slide specimen processing according to claim 1, wherein the slide cover plate (101) at least contains one biological specimen thereon.

8. The slide cover plate for slide specimen processing according to claim 1, wherein an assembly formed after the slide cover plate is pressed tight against the slide, that is, the slide assembly (103), can be placed upright or inclined, with an inclination angle of 1 to 90 degrees.

9. The slide cover plate for slide specimen processing according to claim 1, wherein the bottom locating block (4) is upward hook-like, and the bottom locating block (4) and the width locating block (3) together determine a relative position after the cover plate is pressed against the slide, and assist keeping the cover plate being pressed tight against the slide.

10. The slide cover plate for slide specimen processing according to claim 1, wherein a back of the slide cover plate, that is, the back of the reservoir opening face (7), between outer sides thereof and the capillary plane (1) is provided with a reinforcing rib (8).

11. The slide cover plate for slide specimen processing according to claim 1, wherein a material of the slide cover plate is a material that is able to remain non-deformed or not-soften when enduring 80°C or above.

12. The slide cover plate for slide specimen processing according to claim 1, wherein a bottom of the capillary plane (1) is further provided with two guiding angles (11); one funnel-type guiding opening (5) is formed between the two guiding angles, and allows solution in the capillary plane to flow out of the guiding opening; and a height of the guiding angle (11) relative to the capillary plane is aligned to the depth locating face (2).

13. A method of using the slide cover plate for slide specimen processing according to any one of claims 1-12, **characterized in that**, a slide assembly (103) that is assembled after the slide cover plate is pressed tight against the slide can be immersed entirely or with a bottom thereof partially inserted in a hot solution for heating, and even if evaporation generates during the heating, solution in a gap can also be automatically replenished by sucking liquid from a gap opening at the bottom or from a guiding opening (5).
